# FASCICULE DE BREVET EUROPEEN

(11) **EP 2 125 964 B1**
(45) Date de publication et mention de la délivrance du brevet: **19.06.2013**
(21) Numéro de dépôt: 08799855.5
(22) Date de dépôt: 17.03.2008
(51) Int. Cl.: C09B 61/00, C09B 59/00, A23C 9/13, A23L 1/275, A23L 2/58

(54) **MODIFICATION DE LA NUANCE COLORANTE D'ANTHOCYANES POUR L'OBTENTION DE SUBSTANCES COLORANTES**
ÄNDERUNG DES FARBTONS VON ANTHOCYANEN FÜR DEN ERHALT VON FARBSTOFFEN
MODIFICATION OF THE COLOR HUE OF ANTHOCYANINS FOR THE OBTENTION OF COLORING SUBSTANCES

(30) Priorité: 28.03.2007 FR 0754106
(43) Date de publication de la demande: 02.12.2009
(73) Titulaire: Diana Naturals, 35560 Bazouges La Perouse (FR)
(72) Inventeur: INISAN, Claude, 35830 Betton (FR); BESNARD, Matthieu, 35340 Liffre (FR); BAHU, Cécile, 35133 Saint Etienne en Cogles (FR); MEGARD, Denis, 35460 Saint Brice En Cogles (FR)
(74) Mandataire: Dossmann, Gérard
(86) Numéro de dépôt international: PCT/FR2008/050454
(87) Numéro de publication internationale: WO 2008/129215

(56) Documents cités:
- EP-A1- 0 096 481
- US-A- 4 481 226
- N.E. ES-SAFI ET AL.: "New Polyphenolic Compounds with Xanthylium Skeletons formed through Reaction between (+)-Catechin and Glyoxylic acid" J.AGRI.FOOD CHEM., vol. 47, 1999, pages 5211-5217, XP002446675
- N.E.ES-SAFI ET AL.: "Study of the Reaction between (+)-Catechin and Furfural Derivatives in the Presence or Absence of Anthocyanins and their Implication in Food Color Change" J.AGRIC.FOOD CHEM., vol. 48, 2000, pages 5946-5954, XP002446676
- N.E.ES-SAFI ET AL.: "Role of Aldehydic Derivatives in the Condensation of Phenolic Compounds with Emphasis on the sensorial Properties of Fruit-Derived Foods" J.AGRIC.FOOD CHEM., vol. 50, 2002, pages 5571-5585, XP002446677

## Description

La présente invention est relative à une composition alimentaire colorante comportant des colorants modifiés de la famille des anthocyanes ainsi qu'à un procédé de modification bathochrome de ces colorants.

Cette composition colorante, est utilisable en tant qu'additif ou ingrédient dans des préparations alimentaires.

Un colorant alimentaire est un additif naturel ou synthétique utilisé ou prévu pour être utilisé principalement pour augmenter ou rétablir la couleur d'un aliment.

Les colorants naturels sont de plus en plus utilisés dans les aliments. Ce sont des extraits aqueux ou des oléorésines obtenus généralement à partir des pigments de fruits, légumes, graines ou épices.

Les anthocyanes issues de végétaux naturellement riches en anthocyanes (ex. : carotte pourpre, sureau, chou rouge, hibiscus, cassis, maïs pourpre, pomme de terre pourpre...) ont une structure générale du type

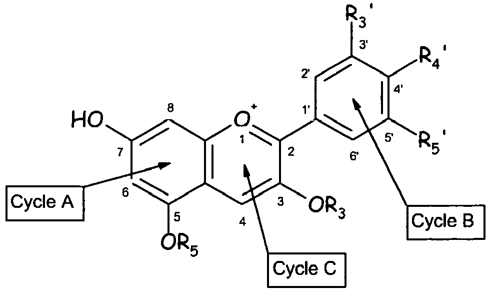

Parmi les colorants naturels, les colorants anthocyaniques disponibles sur le marché ont différentes nuances colorantes en fonction de leur origine, c'est-à-dire en fonction du fruit ou légume dont ils sont issus.

Le Tableau 1 compare les nuances bleues relatives des principales sources disponibles sur le marché.

| | Stabilité | Valeur de b* dans le système CIE La*b* (L fixé à 65) |
|---|---|---|
| Radis | bonne | 30 |
| Fruits rouges & fleurs (sureau, aronia, hibiscus) | faible | 15/25 |
| Carotte pourpre | bonne | 7/10 |
| Raisin | moyenne | -5/+5 |
| Chou rouge | bonne | -20/-10 |

La notation 1976 CIE La*b* définit un espace colorimétrique dans lequel chaque couleur est définie par trois paramètres (L*, a* et b*).
- le paramètre L* reflète la clarté de la couleur, la valeur L* étant égale à 0 pour le noir et 100 pour le blanc absolu. Plus la valeur de L* est élevée, moins la coloration est intense.
- Le paramètre a* correspond à l'axe du couple antagoniste vert/rouge
- Le paramètre b correspond à l'axe du couple antagoniste bleu/jaune

Il est connu en particulier que les anthocyanes et particulièrement leur transformation au cours de la vinification et lors du stockage du vin conduit à des colorations bleuissantes (Brouillard R. et al., Phytochemistry, 64, 2003, 1179-1186, Brouillard R. et al., BioFactors, 6, 1997, 403-410, Bakker J. & Timberlake C. F., J. Agric. Food Chem., 45, 1997, 35-43).

Ces transformations chimiques expliquent la formation de tanins ainsi que la bonne stabilité des anthocyanes du vin après vinification. En effet, alors que les anthocyanes du raisin sont relativement peu stables, les vins conservent leurs pigments pendant de longues périodes.

Parmi les transformations chimiques, des réactions de condensation sont occasionnées par la présence dans le vin d'aldéhydes et de polyphénols issus de raisin. Ces polyphénols appartiennent à la famille des flavanols dont le plus répandu est la catéchine. La structure des flavanols présente le même squelette que celui des anthocyanes et la numérotation des atomes est identique.

Timberlake a décrit la formation d'un pont aldéhydique entre le carbone C₈ de l'anthocyane et le carbone C₈ du flavanol (Timberlake C. F. & Bridle P., J. Sci. Fd Agric., 28, 1977, 539-544). Cependant, la structure formée ne montre pas de bleuissement.

Dans le vin a également été décrite la formation de pyanoanthocyanines : cette structure d'anthocyane est obtenue par la réaction d'acide pyruvique présent dans le raisin sur le carbone C₄ de l'anthocyane ce qui forme un nouveau cycle avec l'hydroxyle en C₅. La structure vinylique ainsi formée peut réagir avec l'acétaldéhyde puis avec différents flavanols. Ces nouvelles structures présentent un effet bathochrome important (bleuissement) comparativement aux anthocyanes de départ. De nombreuses structures ont ainsi été déterminées dans le vin.

Cependant, ces réactions sont très lentes et se déroulent sur plusieurs mois, voire plusieurs année.

Les pyranoanthocyanines peuvent également être obtenues par addition nucléophile de vinylphénols sur l'anthocyane. Les pyranoanthocyanines montrent un effet hypsochrome (rougissement) par rapport à l'anthocyane de départ.

Des pyranoanthocyanines naturelles ont été identifiées dans la carotte pourpre (Schwarz M., et al., J. Agric. Food Chem., 52, 2004, 5095-5101), et dans l'orange sanguine (Hillebrand S., et al., J. Agric. Food Chem., 52, 2004, 7331-7338). Dans les deux cas, la formation des pyranoanthocyanines est observée après une longue période de stockage des jus. Les dérivés formés présentent tous un déplacement hypsochrome de leur λₘₐₓ d'environ une vingtaine de nanomètres, de l'ordre de 530 à 510 nm, correspondant à un rougissement de la nuance.

D'autre réactions de condensations entre une anthocyane et un polyphénol sont connues, par exemple une condensation directe qui se fait entre le C₄ de l'anthocyane et le C₈ du flavanol. Cette réaction est très lente et le produit de la réaction montre un effet hypsochrome par rapport à l'anthocyane de départ.

Il est possible également de faire une condensation en présence d'aldéhyde. Dans ce cas, l'aldéhyde forme un pont entre le C₈ de l'anthocyane et le C₈ du flavanol et la structure formée ne montre pas de bleuissement.

EP 0 969 481 concerne le procédé d'obtention de compositions colorantes contenant des anthocyanes issues de raisin comportant les étapes de traitement par du dioxyde de soufre, des enzymes et, après purification, un traitement par un aldéhyde. Les compositions obtenues par le procédé de ce document présentent ainsi une couleur intensifiée rouge.

Es-Safi et al., J. Agric. Food Chem. Vol 47, 1999 décrit les effets d'une réaction entre une catéchine et le glyoxal. Le composé polyphénolique correspondant obtenu est un pigment jaune. Es-Safi et al., J. Agric. Food Chem. Vol 48, 2000 décrit les effets d'une réaction entre une catéchine et le furfural ou le 5-(hydroxyméthyl) furfural dans des milieux réactionnels simplifiés. Es-Safi et al., J. Agric. Food Chem. Vol 50, 2002 décrit les effets d'une réaction entre une catéchine et différents aldéhydes. En présence d'une anthocyane telle que la malvidine 3-O-glucoside, cette réaction de condensation donne des dimères dont le λₘₐₓ est déplacé vers le bleu. Ces réactions sont cependant effectuées avec des produits purs.

Il est connu un colorant bleu dérivé d'anthocyanes (WO03/010240). Le procédé d'obtention de la couleur bleue dans ce cas résulte de la complexation des anthocyanes avec de l'aluminium, ce qui permet de stabiliser la forme quinonique du chromophore, donnant un effet bathochrome. La quantité d'aluminium introduit dans le milieu pour obtenir l'effet bathochrome n'est cependant pas négligeable et l'impact néfaste en terme de santé publique est à prendre en considération.

Par ailleurs, d'autres métaux lourds comme le molybdène ou le tungstène permettent également d'obtenir un effet bathochrome mais, ici encore, les quantités nécessaires sont rédhibitoires à une utilisation alimentaire.

Il subsiste un besoin en colorants naturels qui puissent remplacer des colorants synthétiques dans certaines applications alimentaires.

La demanderesse a mis au point une nouvelle composition colorante présentant une nuance bleue, qui constitue l'objet de l'invention.

L'invention a également pour objet le procédé d'obtention de cette composition colorante.

Un autre objet est constitué par les applications de cette composition colorante comme additif ou ingrédient lors de la fabrication de produits alimentaires.

D'autres objets apparaîtront à la lecture de la description et des exemples qui suivent.

La composition colorante conforme à l'invention comprend des colorants modifiés de la famille des anthocyanes présents dans un produit naturel d'origine végétale.

Par colorants modifiés, on entend des substances capables de colorer les aliments une fois ajoutés aux produits alimentaires, confiseries, boissons et autres produits similaires destinés à être ingérés.

Il y a de nombreux végétaux naturellement riches en anthocyanes (ex. : carotte pourpre, sureau, chou rouge, hibiscus, cassis, maïs pourpre, pomme de terre pourpre...).

De préférence, le produit naturel d'origine végétale utilisé est du chou rouge, de la carotte pourpre ou du sureau.

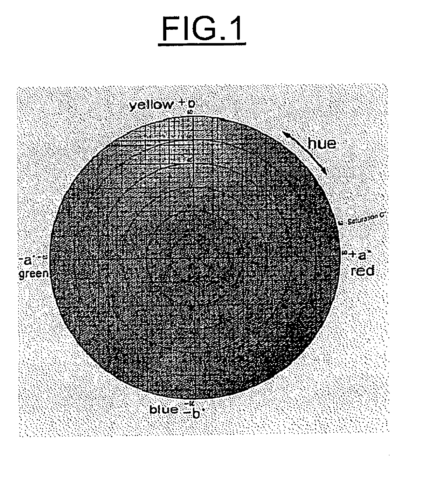

Pour pouvoir comparer la nuance de différentes sources d'anthocyanes en solution, il est nécessaire de normaliser la mesure des La*b* dans le système CIE L*a*b* (figure 1, représentant la sphère d'intégration). La lecture se fait dans une solution aqueuse tamponnée à pH 3,00 ± 0,05 à 20°C et la valeur de L est arbitrairement fixée à 65 ± 0,5.

La mesure de la couleur est effectuée avec un spectrocolorimètre La*b* : la couleur est ainsi définie par 3 coordonnées reportées sur une sphère (figure 1).

Le chou rouge a traditionnellement une valeur de b* dans le système modèle "1976 CIE L*a*b*" autour de -15. Dans le cas du chou rouge, la composition colorante à nuance bleue selon l'invention est telle que la valeur de b* dans le modèle "1976 CIE L*a*b*" est inférieure à -25 pour les pH et valeur de L précédemment fixés. De préférence, cette valeur est inférieure à -30. Plus préférentiellement, elle est inférieure à -35 et encore plus préférentiellement, elle est inférieure à -40 pour les pH et valeur de L précédemment fixés.

La carotte pourpre *(Daucus carota*) a une valeur de b* dans le système modèle "1976 CIE L*a*b*" de 7 à 10. La composition colorante de l'invention à base de carotte pourpre est telle que la valeur de b* dans le modèle "1976 CIE L*a*b*" est inférieure à 4, pour les pH et valeur de L précédemment fixés. De préférence, cette valeur est inférieure à 2. Plus préférentiellement, elle est inférieure à 0 et encore plus préférentiellement, elle est inférieure à -2 pour les pH et valeur de L précédemment fixés.

Le sureau a une valeur de b* dans le système modèle "1976 CIE L*a*b*" de 10 à 20. Dans le cas du sureau, la composition colorante de l'invention est telle que la valeur de b* dans le modèle "1976 CIE L*a*b*" est inférieure à 5, pour les pH et valeur de L précédemment fixés. De préférence, cette valeur est inférieure à 3. Plus préférentiellement, elle est inférieure à 1 et encore plus préférentiellement, elle est inférieure à -1 pour les pH et valeur de L précédemment fixés.

Le procédé de modification bathochrome des colorants de la famille des anthocyanes présents dans un produit naturel d'origine végétale est caractérisé par le fait que l'on fait réagir ces anthocyanes avec au moins un aldéhyde.

Les anthocyanes modifiées issues du produit d'origine végétale sont de formule générale : 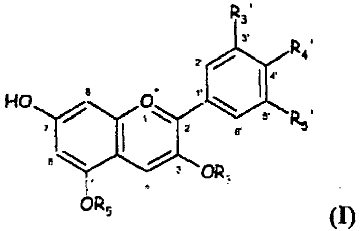 dans laquelle R₃^{'}, R₄^{'} et R₅^{'} sont indépendamment H, OH, ou OCH₃ et R₃ et R₅ sont indépendamment H ou un glycoside acétylé ou non.

Le procédé de modification bathochrome permet d'obtenir une diminution de b* d'au moins 5 unités dans les anthocyanes modifiées par rapport aux anthocyanes non modifiées, dans un système modèle "1976 CIE L*a*b*", L étant fixé à 65± 0,5 et les mesures étant effectuées dans une solution aqueuse tamponnée à pH 3,00 ± 0,05 à 20°C.

Les colorants modifiés de la famille des anthocyanes résultent de la réaction entre des anthocyanes de formule (I) et au moins un aldéhyde choisi parmi le fin-aldéhyde, l'acide glyoxylique, le butyraldéhyde, le valéraldéhyde et l'isovaléraldéhyde.

Le procédé selon l'invention est caractérisé par le fait qu'au moins un aldéhyde est choisi parmi, le butyraldéhyde, le valéraldéhyde, l'isovaléraldéhyde, le furaldéhyde, l'acide glyoxylique.

Plus préférentiellement, au moins un aldéhyde est choisi parmi l'acide glyoxylique ou le furaldéhyde.

L'aldéhyde peut être ajouté dans la solution d'anthocyanes ou produit *in situ* par une étape de fermentation.

Il est possible d'ajouter au moins un polyphénol de la famille des flavonoïdes, des acides cinnamiques ou des phlorotannins. Préférentiellement, le flavonoïde est un flavanol, un flavonol, une chalcone, une flavone ou une isoflavone.

Selon le procédé de l'invention, le produit naturel d'origine végétale est broyé avant de subir une étape de séparation solide/liquide, de préférence à un pH inférieur à 7 et encore, plus préférentiellement, à un pH inférieur à 5.

De préférence, le produit naturel d'origine végétale est du chou rouge, de la carotte pourpre ou du sureau.

Dans un mode de réalisation du procédé selon l'invention, le ou les aldéhydes sont ajoutés en quantité telle que le rapport molaire aldéhyde/anthocyane soit compris entre 1/10 et 2/1 par rapport à la quantité d'anthocyanes présentes dans le produit naturel d'origine végétale. Ensuite, après agitation à une température supérieure à 0°C, on clarifie le jus obtenu avant de le concentrer pour donner un produit hydrosoluble. Préférentiellement, l'étape d'agitation s'effectue à une température supérieure à 10°C.

Dans un mode de réalisation préféré du procédé de l'invention, le ou les aldéhydes sont ajoutés en un rapport molaire aldéhyde/anthocyanes strictement supérieur à 2/1 par rapport à la quantité d'anthocyanes présentes dans le produit naturel d'origine végétale. Ensuite, après agitation à une température supérieure à 0°C, on procède à une séparation liquide/solide des deux phases obtenues. Préférentiellement, l'étape d'agitation s'effectue à une température supérieure à 10°C. Il est possible ensuite de concentrer la phase liquide pour donner un produit hydrosoluble, et de sécher la phase solide pour donner un produit non hydrosoluble.

Un autre objet de l'invention est constitué par l'utilisation d'une composition selon l'invention en tant qu'additif ou ingrédient lors de la fabrication d'un produit alimentaire.

En effet, pour les utilisations de telles compositions dans des produits liquides, (par exemple des boissons), une différence de nuance est détectable pour l'oeil humain pour un ΔEab >4, dans lequel ΔEab = (Δa*²+Δb*²+ΔL²)^{1/2}.

Pour les utilisations de telles compositions colorantes dans des produits solides (par exemple des yaourts), une différence de nuance est détectable pour l'oeil humain pour un ΔEab >2, où ΔEab = (Δa*²+Δb*²+ΔL²)^{1/2}. Ces valeurs sont mesurées avec un spectrocolorimètre en mode transmission pour les liquides et en mode réflexion pour les solides.

Les compositions selon l'invention peuvent être utilisées en particulier pour la coloration de fourrage de gâteaux et biscuits, la coloration de produits laitiers, de boissons, de confiseries.

Les compositions colorantes selon l'invention permettent de remplacer des colorants synthétiques par des colorants naturels dans certaines applications comme par exemple la coloration de la pulpe d'orange sanguine dans l'Orangina™ "Orange sanguine", ou la coloration de morceau de fruits dans des yaourts. De plus, en raison de leur structure différente de celle des anthocyanes classiques, certaines anthocyanes formées par la réaction de bleuissement deviennent insolubles dans l'eau, vraisemblablement suite à des polymérisations. Cette fraction insoluble permet de colorer des solides en évitant la diffusion de la couleur dans la matrice environnante dans l'application finale (ex. : morceau de fruits rouges dans les yaourts).

Les exemples suivants illustrent l'invention sans la limiter aucunement.

### Exemple 1 modification des anthocyanes de carotte pourpre par le procédé bathochrome de l'invention

Les anthocyanes de carotte pourpre sont extraites du végétal par des étapes de lavage, de broyage, de pressage, de clarification puis de concentration du jus obtenu.

La solution aqueuse d'anthocyanes obtenue par extraction des anthocyanes naturelles d'origine végétale est concentrée de façon à avoir une solution faisant environ 40°brix.

L'acide glyoxylique pur est ajouté en quantité telle que le rapport molaire aldéhyde/anthocyanes soit voisin de 1. La nuance obtenue est dépendante de ce rapport molaire aldéhyde/anthocyanes. La solution est ensuite agitée à l'aide d'une pale d'agitation ayant une vitesse de rotation de 15 tours par minute à température ambiante et dans un réacteur fermé pendant 12 à 24 heures. Après cette étape d'agitation, la réaction entre les aldéhydes et les anthocyanes est terminée. La nuance de la solution est plus bleue que la solution initiale d'anthocyanes.

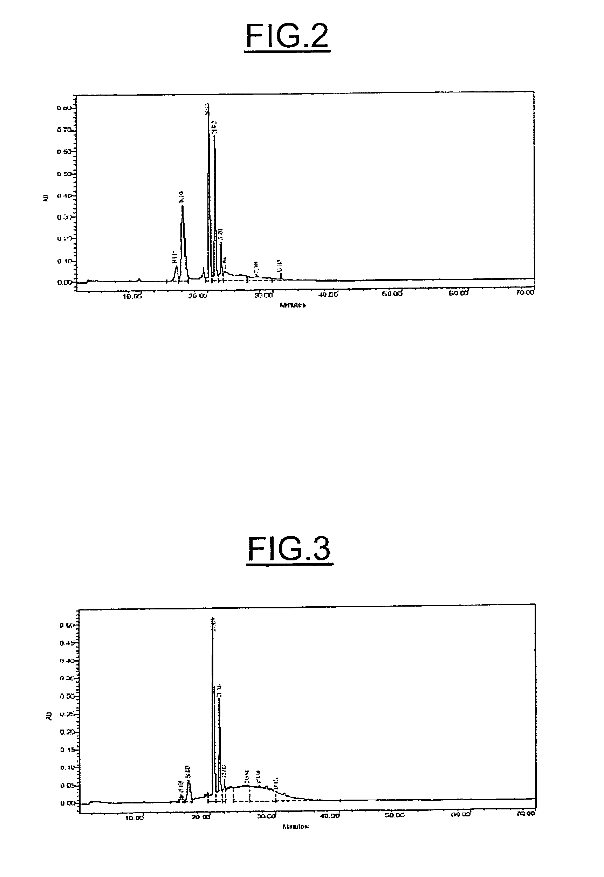

Les figures 2 et 3 représentent des profils HPLC obtenus avant et après la réaction de bleuissement. La figure 2 présente un profil HPLC d'un concentré de carotte pourpre standard (enregistré à 525 nm). La figure 3 présente un profil HPLC du concentré de carotte pourpre après la réaction de bleuissement (enregistré à 525 nm)

Le profil HPLC caractéristique d'un produit ayant une nuance plus bleue que sont homologue de départ présente un massif en fin de profil (Figure 2). L'importance relative de ce massif est directement proportionnelle au bleuissement obtenu. Plus le bleuissement est important, plus la surface du massif est importante relativement aux pics caractéristiques du produit de départ.

### Exemple 2 modifcation de la valeur de b* en fonction de la quantité d'aldéhyde dans la carotte pourpre

Une solution aqueuse d'acide glyoxylique à 100 g/L est préparée. Cette solution est ajoutée à la solution d'anthocyanes de carotte pourpre à 40°brix de l'exemple 1 ci-dessus, de façon à avoir un rapport massique acide glyoxylique/concentré de carotte pourpre compris entre 0 et 1%. Cette solution est ensuite agitée à l'aide d'une pale d'agitation ayant une vitesse de rotation de 15 tours par minute à température ambiante et dans un réacteur fermé pendant 24 heures.

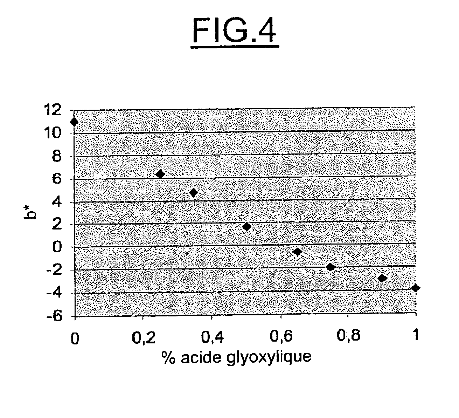

La figure 4 montre le b* obtenu après 24h de réaction entre l'acide glyoxylique et les anthocyanes de carotte pourpre. Le pourcentage d'acide glyoxylique ajouté est exprimé en fonction de la quantité de concentré de carotte pourpre. En ajoutant 1% d'acide glyoxylique au concentré de carotte pourpre, on obtient une diminution de b* qui passe de b*=11 à b*=-4 en 24 heures.

### Exemple 3 : Coloration d'une boisson.

L'ajout de concentré de carotte pourpre de nuance standard (b*=8,5) dans une boisson sans autre colorant permet d'obtenir une boisson colorée dont la valeur de b* est comprise entre 8 et 8,5. La même expérience a été effectuée avec la composition à nuance bleue selon l'invention, et ayant un b*=0, la valeur de b* de la boisson mesurée est comprise entre 0 et -0,5.

Le concentré peut être incorporé dans la boisson à des teneurs allant de 0,5 à 30%.

### Exemple 4 : Coloration d'un yaourt.

L'ajout de concentré de carotte pourpre de nuance standard (b*=8,5) dans un yaourt sans autre colorant permet d'obtenir un yaourt colorée dont le b* est compris entre 8 et 8,5.

La même composition d'anthocyanes à nuance bleue que précédemment a été utilisée, et dans ce cas, le b* du yaourt mesuré est compris entre 0 et -0,5. La quantité de concentré de carotte pourpre incorporée au yaourt est de 1%.

### Exemple 5 : Coloration d'un fourrage de gâteau.

L'ajout de concentré de carotte pourpre de nuance standard (b*=8,5) dans un fourrage de biscuit sans autre colorant permet d'obtenir un fourrage coloré dont le b* est compris entre 8 et 8,5. La même composition d'anthocyanes à nuance bleue que précédemment a été utilisée, et dans ce cas, la valeur de b* du yaourt mesurée est comprise entre 0 et -0,5.

Le concentré de carotte pourpre est incorporé au fourrage à une teneur de 1%.

## Revendications

1. Composition colorante présentant une nuance bleue, comprenant des colorants modifiés de la famille des anthocyanes présents dans un produit naturel d'origine végétale et de formule générale : 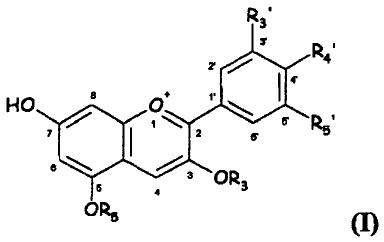 dans laquelle R₃^{'}, R₄^{'} et R₅^{'} sont indépendamment H, OH, ou OCH₃ et R₃ et R₅ sont indépendamment H ou un glycoside acétylé ou non, les colorants modifiés résultant de la réaction entre des anthocyanes de formule (I) et au moins un aldéhyde **choisi parmi le furaldéhyde, l'acide glyoxylique, le butyraldéhyde, le valéraldéhyde et l'isovaléraldéhyde.**

2. Composition colorante selon la revendication 1, dans laquelle le produit naturel d'origine végétale est le chou rouge.

3. Composition colorante selon la revendication 2, dans laquelle la nuance bleue de cette composition est telle que la valeur de b* dans le modèle "1976 CIE L*a*b*" est inférieure à -25, et de préférence inférieure à -30, -35 ou -40, L étant fixé à 65± 0,5 et les mesures étant effectuées dans une solution aqueuse tamponnée à pH 3,00 ± 0,05 à 20°C.

4. Composition colorante selon la revendication 1, dans laquelle le produit naturel d'origine végétale est la carotte pourpre.

5. Composition colorante selon la revendication 4, dans laquelle la nuance bleue de cette composition est telle que la valeur de b* dans le modèle "1976 CIE L*a*b*" est inférieure à 4 et de préférence inférieure à 2, 0 ou -2, L étant fixé à 65± 0,5 et les mesures étant effectuées dans une solution aqueuse tamponnée à pH 3,00 ± 0,05 à 20°C.

6. Composition colorante selon la revendication 1, dans laquelle le produit naturel d'origine végétale est du sureau.

7. Composition colorante selon la revendication 6, dans laquelle la nuance bleue de cette composition est telle que la valeur de b* dans le modèle "1976 CIE L*a*b*" est inférieure à 5 et de préférence inférieure à 3, 1 ou -1, L étant fixé à 65± 0,5 et les mesures étant effectuées dans une solution aqueuse tamponnée à pH 3,00 ± 0,05 à 20°C.

8. Procédé de modification bathochrome des colorants de la famille des anthocyanes présents dans un produit naturel d'origine végétale, **caractérisé par le fait que** l'on fait réagir ces anthocyanes avec au moins un aldéhyde aldéhyde **choisi parmi le furaldéhyde, l'acide glyoxylique, le butyraldéhyde, le valéraldéhyde et l'isovaléraldéhyde.**

9. Procédé selon l'une quelconque des revendications 8, dans laquelle la modification bathochrome permet d'obtenir une diminution de b* d'au moins 5 unités dans les anthocyanes modifiées par rapport aux anthocyanes non modifiées, dans un système modèle "1976 CIE L*a*b*", L étant fixé à 65± 0,5 et les mesures étant effectuées dans une solution aqueuse tamponnée à pH 3,00 ± 0,05 à 20°C.

10. Procédé selon l'une quelconque des revendications 8 à 9, dans lequel on ajoute au moins un polyphénol de la famille des flavonoïdes, des acides cinnamiques ou des phlorotannins.

11. Procédé selon l'une quelconque des revendications 8 à 10, dans lequel le produit naturel d'origine végétale est broyé de préférence à un pH inférieur à 7, et encore plus préférentiellement inférieur à 5, avant de subir une étape de séparation solide/liquide.

12. Procédé selon l'une quelconque des revendications 8 à 11, dans lequel le produit naturel d'origine végétale est du chou rouge, de la carotte pourpre ou du sureau.

13. Procédé selon l'une quelconque des revendications 8 à 12, dans lequel le ou les aldéhydes sont ajoutés en quantité telle que le rapport molaire aldéhydes/anthocyanes soit compris entre 1/10 et 2/1 par rapport à la quantité d'anthocyanes présentes dans le produit naturel d'origine végétale.

14. Procédé selon l'une quelconque des revendications 8 à 12, dans lequel le ou les aldéhydes sont ajoutés en un rapport molaire aldéhydes/anthocyanes strictement supérieur à 2/1 par rapport à la quantité d'anthocyanes présentes dans le produit naturel d'origine végétale.

15. Procédé selon l'une quelconque des revendications 8 à 12 et 14, dans lequel, après agitation à une température supérieure à 0°C, et de préférence supérieure à 10, on procède à une séparation liquide/solide des deux phases obtenues.

16. Procédé selon l'une quelconque des revendications 8 à 12 et 14 et 15, dans lequel la phase liquide est concentrée pour donner un produit hydrosoluble et/ou la phase solide est séchée pour donner un produit non hydrosoluble.

17. Utilisation d'une composition selon l'une quelconque des revendications 1 à 7 en tant qu'additif ou ingrédient lors de la fabrication d'un produit alimentaire, tel que les gâteaux, biscuits, produits laitiers, boissons ou confiseries.

## Patentansprüche

1. Färbezusammensetzung mit blauem Farbton, umfassend modifizierte Farbstoffe der Anthocyanfamilie, die in einem Naturprodukt pflanzlichen Ursprungs vorkommen und die allgemeine Formel: 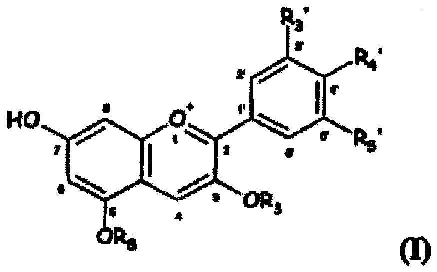 aufweisen, in der R₃', R₄' und R₅' unabhängig H, OH oder OCH₃ bedeuten und R₃ und R₅ unabhängig H oder ein gegebenenfalls acetyliertes Glycosid bedeuten, wobei die modifizierten Farbstoffe das Ergebnis der Reaktion zwischen Anthocyanen der Formel (I) und mindestens einem Aldehyd, ausgewählt aus der Reihe Furaldehyd, Glyoxylsäure, Butyraldehyd, Valeraldehyd und Isovaleraldehyd, sind.

2. Färbezusammensetzung nach Anspruch 1, wobei das Naturprodukt pflanzlichen Ursprungs Rotkohl ist.

3. Färbezusammensetzung nach Anspruch 2, wobei der blaue Farbton dieser Zusammensetzung derart ist, dass der Wert b* in dem Modell "1976 CIE L*a*b*" unter -25, vorzugsweise unter -30, -35 oder -40, liegt, wobei L auf 65 ± 0,5 festgelegt wurde und die Messungen in einer wässrigen auf pH 3,00 ± 0,05 gepufferten Lösung bei 20°C erfolgen.

4. Färbezusammensetzung nach Anspruch 1, wobei das Naturprodukt pflanzlichen Ursprungs die Purpurkarotte ist.

5. Färbezusammensetzung nach Anspruch 4, wobei der blaue Farbton dieser Zusammensetzung derart ist, dass der Wert b* in dem Modell "1976 CIE L*a*b*" unter 4, vorzugsweise unter 2,0 oder -2, liegt, wobei L auf 65 ± 0,5 festgelegt wurde und die Messungen in einer wässrigen auf pH 3,00 ± 0,05 gepufferten Lösung bei 20°C erfolgen.

6. Färbezusammensetzung nach Anspruch 1, wobei das Naturprodukt pflanzlichen Ursprungs der Holunder ist.

7. Färbezusammensetzung nach Anspruch 6, wobei der blaue Farbton dieser Zusammensetzung derart ist, dass der Wert b* in dem Modell "1976 CIE L*a*b*" unter 5, vorzugsweise unter 3, 1 oder -1, liegt, wobei L auf 65 ± 0,5 festgelegt wurde und die Messungen in einer wässrigen auf pH 3,00 ± 0,05 gepufferten Lösung bei 20°C erfolgen.

8. Verfahren zur bathochromen Modifikation von Farbstoffen der Anthocyanfamilie, die in einem Naturprodukt pflanzlichen Ursprungs vorkommen, **dadurch gekennzeichnet, dass** man die Anthocyane mit mindestens einem Aldehyd, ausgewählt aus der Reihe Furaldehyd, Glyoxylsäure, Butyraldehyd, Valeraldehyd und Isovaleraldehyd, umsetzt.

9. Verfahren nach Anspruch 8, bei dem es die bathochrome Modifikation gestattet, in einem Modellsystem "1976 CIE L*a*b*", wobei L auf 65 ± 0,5 festgelegt wurde und die Messungen in einer wässrigen auf pH 3,00 ± 0,05 gepufferten Lösung bei 20°C erfolgen, zu einer Verringerung des b*-Werts in den modifizierten Anthocyanen um mindestens 5 Einheiten im Vergleich zu den nichtmodifizierten Anthocyanen zu gelangen.

10. Verfahren nach einem der Ansprüche 8 bis 9, in dem man mindestens ein Polyphenol der Familie der Flavonoide, der Zimtsäure oder der Phlorotannine hinzufügt.

11. Verfahren nach einem der Ansprüche 8 bis 10, in dem das Naturprodukt pflanzlichen Ursprungs vorzugsweise bei einem pH-Wert von unter 7, noch stärker bevorzugt von unter 5, zerkleinert wird, bevor es einem Fest-Flüssig-Trennungsschritt unterzogen wird.

12. Verfahren nach einem der Ansprüche 8 bis 11, in dem das Naturprodukt pflanzlichen Ursprungs Rotkohl, die Purpurkarotte oder der Holunder ist.

13. Verfahren nach einem der Ansprüche 8 bis 12, in dem der Aldehyd oder die Aldehyde in solch einer Menge hinzugefügt wird/werden, dass das Molverhältnis Aldehyde/Anthocyane zwischen 1/10 und 2/1 in Bezug auf die in dem Naturprodukt pflanzlichen Ursprungs vorliegende Anthocyanmenge liegt.

14. Verfahren nach einem der Ansprüche 8 bis 12, in dem der Aldehyd oder die Aldehyde in einem Molverhältnis Aldehyde/Anthocyane hinzugefügt wird/werden, das strikt höher als 2/1 in Bezug auf die in dem Naturprodukt pflanzlichen Ursprungs vorliegende Anthocyanmenge ist.

15. Verfahren nach einem der Ansprüche 8 bis 12 und 14, in dem nach Rühren bei einer Temperatur über 0°C, vorzugsweise über 10°C, eine Flüssig/Fest-Phasentrennung der beiden erhaltenen Phasen erfolgt.

16. Verfahren nach einem der Ansprüche 8 bis 12 und 14 und 15, in dem die flüssige Phase eingeengt wird, wodurch man zu einem wasserlöslichen Produkt gelangt, und/oder die feste Phase getrocknet wird, wodurch man zu einem nichtwasserlöslichen Produkt gelangt.

17. Verwendung einer Zusammensetzung nach einem der Ansprüche 1 bis 7 als Zusatzmittel oder Bestandteil bei der Herstellung eines Nahrungsmittelprodukts, wie von Kuchen, Keksen, Milchprodukten, Getränken oder Süßwaren.

## Claims

1. Colouring composition having a blue hue, comprising modified colourings of the anthocyanin family present in a natural product of plant origin, of general formula: 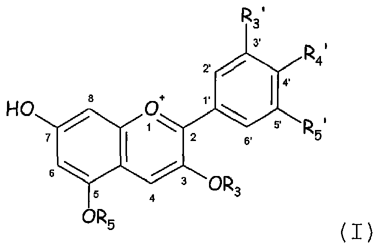 in which R₃', R₄' and R₅' are independently H, OH, or OCH₃ and R₃ and R₅ are independently H or an acetylated or non-acetylated glycoside, the modified colourings resulting from the reaction between anthocyanins of formula (I) and at least one aldehyde chosen from furaldehyde, glyoxylic acid, butyraldehyde, valeraldehyde and isovaleraldehyde.

2. Colouring composition according to Claim 1, in which the natural product of plant origin is red cabbage.

3. Colouring composition according to Claim 2, in which the blue hue of this composition is such that the value of b* in the "1976 CIE L*a*b*" model is less than -25, and preferably less than -30, -35 or -40, L being set at 65 ± 0.5 and the measurements being carried out in an aqueous solution buffered to pH 3.00 ± 0.05 at 20°C.

4. Colouring composition according to Claim 1, in which the natural product of plant origin is purple carrot.

5. Colouring composition according to Claim 4, in which the blue hue of this composition is such that the value of b* in the "1976 CIE L*a*b*" model is less than 4, and preferably less than 2, 0 or -2, L being set at 65 ± 0.5 and the measurements being carried out in an aqueous solution buffered to pH 3.00 ± 0.05 at 20°C.

6. Colouring composition according to Claim 1, in which the natural product of plant origin is elderberry.

7. Colouring composition according to Claim 6, in which the blue hue of this composition is such that the value of b* in the "1976 CIE L*a*b*" model is less than 5, and preferably less than 3, 1 or -1, L being set at 65 ± 0.5 and the measurements being carried out in an aqueous solution buffered to pH 3.00 ± 0.05 at 20°C.

8. Process for the bathochromic modification of colourings of the anthocyanin family present in a natural product of plant origin, **characterized in that** these anthocyanins are reacted with at least one aldehyde chosen from furaldehyde, glyoxylic acid, butyraldehyde, valeraldehyde and isovaleraldehyde.

9. Process according to Claim 8, in which the bathochromic modification makes it possible to obtain a reduction in b* of at least 5 units in the modified anthocyanins compared with the unmodified anthocyanins, in a "1976 CIE L*a*b*" model system, L being set at 65 ± 0.5 and the measurements being carried out in an aqueous solution buffered to pH 3.00 ± 0.05 at 20°C.

10. Process according to either one of Claims 8 and 9, in which at least one polyphenol of the family of flavonoids, cinnamic acids or phlorotannins is added.

11. Process according to any one of Claims 8 to 10, in which the natural product of plant origin is ground preferably at a pH of less than 7, and more preferably still of less than 5, before being subjected to a solid/liquid separation step.

12. Process according to any one of Claims 8 to 11, in which the natural product of plant origin is red cabbage, purple carrot or elderberry.

13. Process according to any one of Claims 8 to 12, in which the aldehyde(s) is (are) added in a quantity such that the aldehyde/anthocyanin molar ratio is between 1/10 and 2/1 relative to the quantity of anthocyanins present in the natural product of plant origin.

14. Process according to any one of Claims 8 to 12, in which the aldehyde(s) is (are) added in an aldehyde/anthocyanin molar ratio strictly greater than 2/1 compared with the quantity of anthocyanins present in the natural product of plant origin.

15. Process according to any one of Claims 8 to 12 and 14, in which, after stirring at a temperature greater than 0°C, and preferably greater than 10°C, a liquid/solid separation of the two phases obtained is carried out.

16. Process according to any one of Claims 8 to 12 and 14 and 15, in which the liquid phase is concentrated in order to give a water-soluble product and/or the solid phase is dried in order to give a non-water-soluble product.

17. Use of a composition according to any one of Claims 1 to 7 as additive or ingredient during the manufacture of a food product, such as cakes, cookies, dairy products, drinks or confectionery products.
